# FASCICULE DE BREVET EUROPEEN

(11) **EP 2 250 032 B1**
(45) Date de publication et mention de la délivrance du brevet: **11.07.2012**
(21) Numéro de dépôt: 09709879.2
(22) Date de dépôt: 10.02.2009
(51) Int. Cl.: B44C 1/10, B60R 13/02, B60R 13/04, B60R 19/44

(54) **PIECE DE CARROSSERIE REVETUE D'UN BANDEAU DECORATIF**
MIT ZIERLEISTE BESCHICHTETES KAROSSERIEBAUTEIL
BODYWORK COMPONENT COVERED WITH A DECORATIVE STRIP

(30) Priorité: 13.02.2008 FR 0850920
(43) Date de publication de la demande: 17.11.2010
(73) Titulaire: Compagnie Plastic Omnium, 69007 Lyon (FR)
(72) Inventeur: ANDRE, Gérald, F-01500 Amberieu en Bugey (FR); VERWAERDE, Marc, F-38460 Moras (FR); CHERON, Hugues, F-01800 Meximieux (FR)
(74) Mandataire: Remy, Vincent Noel Paul
(86) Numéro de dépôt international: PCT/FR2009/050210
(87) Numéro de publication internationale: WO 2009/101355

(56) Documents cités:
- EP-A- 1 439 094
- DE-A1- 3 629 031
- FR-A- 2 491 396
- FR-A- 2 540 441

## Description

La présente invention concerne une pièce de carrosserie revêtue d'un bandeau décoratif.

On connaît déjà de l'état de la technique une pièce de carrosserie d'un véhicule automobile revêtue d'un logo autocollant. Le logo est collé sur la pièce de carrosserie, généralement sur une pièce relativement plane ou à surface développable comme une aile ou une portière.

Avant collage, le logo est recouvert, d'une part, d'une pellicule de protection sur une surface destinée à être visible depuis l'extérieur du véhicule une fois le logo collé sur le véhicule et, d'autre part, d'une colle sur une autre surface destinée à venir en contact avec la pièce de carrosserie, cette couche de colle étant protégée par un film support. Le logo est découpé dans une matière plastique souple.

Afin de positionner correctement le logo sur la pièce, le film support du logo comprend des orifices de positionnement du film par rapport à la pièce de carrosserie. On positionne les orifices par rapport à des moyens de référence de la pièce de carrosserie, par exemple des moyens rapportés, ce qui permet de positionner indirectement le logo sur la pièce.

Toutefois, lorsque le logo doit être appliqué sur une surface relativement galbée en trois dimensions, non développable en une surface plane, les orifices de positionnement ne permettent pas d'appliquer le logo en suivant correctement le galbe, ni de respecter précisément le positionnement du logo par rapport à la pièce, notamment lorsque le logo présente des dimensions relativement grandes, comme c'est le cas pour un bandeau décoratif.

L'invention a pour but de fournir une pièce de carrosserie, notamment relativement galbée, revêtue d'un bandeau décoratif correctement positionné par rapport à la pièce de carrosserie.

A cet effet, l'invention a pour objet une pièce de carrosserie d'un véhicule automobile, caractérisée en ce qu'elle est revêtue au moins en partie d'un bandeau décoratif, la pièce étant obtenue par un procédé dans lequel, le bandeau décoratif étant collé sur un film support, on chauffe le bandeau décoratif avant de l'appliquer sur la pièce de carrosserie et on positionne le bandeau décoratif par rapport à la pièce de carrosserie en positionnant le film support par rapport à la pièce de carrosserie.

En chauffant le bandeau, on l'assouplit ce qui permet de mieux suivre le galbe de la pièce de carrosserie et ce, quelle que soit la taille du bandeau décoratif. Le bandeau subit en effet une déformation qui permet de l'adapter au galbe de la pièce. Cette déformation est ainsi la plus continue possible, ce qui permet d'écarter les risques de décollement du bandeau liés notamment au rappel élastique du bandeau. Le bandeau est donc précisément positionné par rapport à la pièce de carrosserie, par l'intermédiaire du positionnement du film support, tout en épousant la forme de cette dernière.

Le bandeau est généralement plus grand, plus épais et plus rigide qu'un logo. De plus, le bandeau assure, en plus de sa fonction de décoration, une fonction de protection des chocs, à la différence du logo, qui n'exerce qu'une fonction décorative.

Un tel bandeau est généralement réalisé dans une matière plastique, par exemple en polyuréthane revêtu de film PBT ou de PVC adhésivé.

Selon une caractéristique optionnelle de la pièce selon l'invention, le film support est réalisé dans une matière thermoplastique, par exemple en polyester, en PVC ou en polycarbonate.

Un tel film support est flexible mais n'est pas étirable. Ainsi, le film support garantit que, si il est correctement positionné par rapport à la pièce de carrosserie, le bandeau est également correctement positionné par rapport à cette même pièce.

En outre, la matière thermoplastique du film est choisie de façon que, lors du chauffage, le film conserve ses dimensions et sa caractéristique non étirable. Ainsi, on peut positionner précisément la pièce par l'intermédiaire du film.

Selon une autre caractéristique optionnelle de la pièce, la pièce est une peau de pare chocs.

La peau de pare chocs est, parmi les pièces de carrosserie du véhicule, l'une de celles qui présentent généralement les galbes les plus prononcés. Ainsi, grâce à l'invention, la peau de pare chocs peut être revêtue du bandeau décoratif correctement positionné. Le bandeau décoratif pourra ainsi revêtir un coin de la peau de pare chocs, c'est à dire la partie de la peau de pare chocs reliant une partie frontale de la peau à une partie latérale de la peau qui définit généralement une portion du contour du passage de roue du véhicule.

Selon d'autres caractéristiques optionnelles de la pièce selon l'invention :
- Le bandeau décoratif est revêtu d'une couche de colle sur une surface destinée à revêtir la pièce de carrosserie, de préférence une colle dont la tenue sera garantie par pression à l'application.
- Le film support protégeant la couche de colle et supportant le bandeau comprend des moyens de positionnement du film par rapport à la pièce de carrosserie, ces moyens comprenant au moins un orifice circulaire et au moins un orifice oblong ménagé dans le film support. L'orifice oblong permet de positionner précisément le bandeau par l'intermédiaire de son film support selon au moins une direction.

Selon une autre caractéristique optionnelle de la pièce selon l'invention, avant de chauffer le bandeau décoratif, on découpe, dans une feuille multicouche comprenant :
- une couche de matière plastique dans laquelle est réalisée le bandeau décoratif,
- la couche de colle revêtant le bandeau décoratif,
- une couche de matière plastique dans laquelle est réalisée le film support revêtant la couche de colle,
la couche de matière plastique dans laquelle est réalisée le bandeau décoratif et la couche de colle, de façon à former le bandeau, les orifices étant ménagés dans une partie du film ne revêtant plus la couche de colle après la découpe de la feuille multicouche.

Ainsi, on découpe directement le bandeau collé à son film support ce qui permet de positionner précisément le bandeau par rapport au film. Le positionnement correct du film par rapport à la pièce de carrosserie grâce aux moyens de positionnement du film permet ainsi le positionnement précis du bandeau par rapport à la pièce de carrosserie.

Avantageusement, on ménage les orifices dans le film support et on découpe la couche de matière plastique dans laquelle est réalisée le bandeau décoratif et la couche de colle par emboutissage de la feuille multicouche.

Selon d'autres caractéristiques optionnelles de la pièce selon l'invention :
- Le bandeau décoratif est positionné dans un enfoncement de la pièce de carrosserie. Dans une telle pièce, le positionnement imprécis du bandeau est relativement visible. Une telle pièce nécessite donc un positionnement précis du bandeau. En effet, l'enfoncement est délimité par un contour à l'intérieur duquel le bandeau est positionné. L'espace entre le bandeau et ce contour doit être relativement régulier sans quoi, un observateur de la pièce de carrosserie perçoit facilement un mauvais positionnement du bandeau sur la pièce. Grâce à l'invention, le bandeau peut être ajusté régulièrement au contour de l'enfoncement.
- Le bandeau décoratif est positionné en suivant une ligne de style ou un contour d'un élément rapporté à la pièce. Le positionnement peut aussi devoir être fait par rapport aux blocs optiques ou par rapport à des accessoires tels qu'une grille, des anti-brouillards, etc. Par exemple, le constructeur peut souhaiter un parallélisme précis avec une ligne inférieure d'une vitre de bloc optique.

Avantageusement, le film support comprend deux parties supports du bandeau décoratif séparables l'une par rapport à l'autre, une des deux parties comprenant les orifices de positionnement.

L'invention a également pour objet un véhicule automobile caractérisé en ce qu'il comprend une pièce de carrosserie telle que définie ci-dessus.

L'invention sera mieux comprise à la lecture de la description qui va suivre, donnée uniquement à titre d'exemple non limitatif et faite en se référant aux dessins dans lesquels :
- la figure 1 est une vue en perspective d'une pièce de carrosserie selon l'invention ;
- la figure 2 est une vue d'un ensemble comprenant un bandeau décoratif porté par un film support ;
- la figure 3 est une coupe selon la ligne I-I du bandeau décoratif de la figure 2 ;
- la figure 4 est une vue schématique d'un dispositif d'assemblage de la pièce de la figure 1 ;
- la figure 5 est une vue en coupe du dispositif de la figure 4 lors de l'assemblage du bandeau sur la pièce de carrosserie de la figure 1.

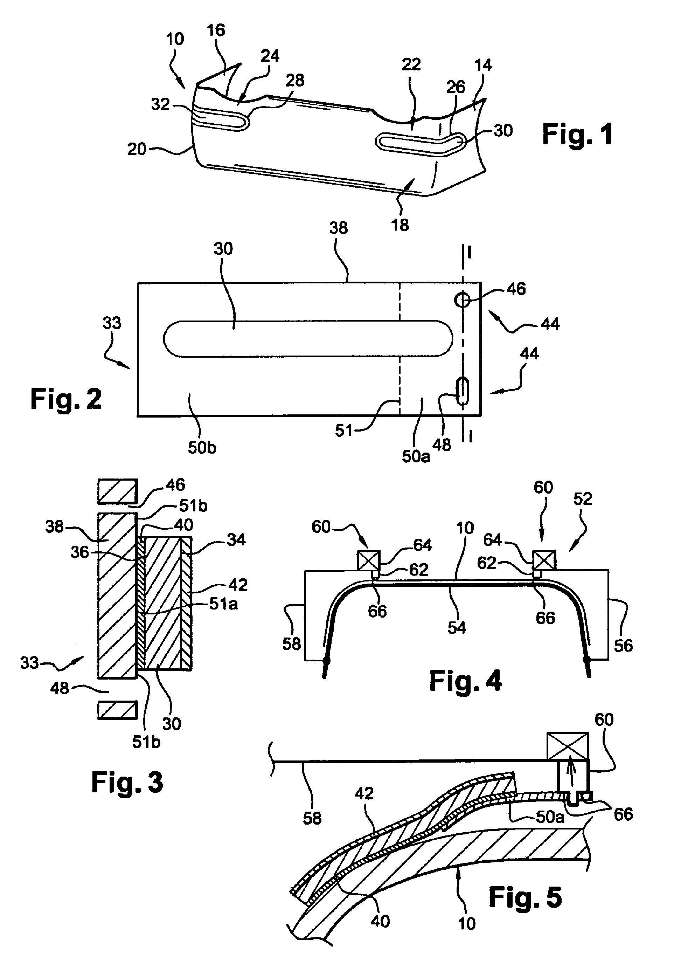

On a représenté sur la figure 1 une pièce de carrosserie d'un véhicule automobile selon l'invention désignée par la référence générale 10.

En l'espèce, la pièce 10 est une peau de pare chocs. La peau de pare chocs 10 comprend une partie frontale 12 sensiblement verticale et présentant un galbe en trois dimensions une fois montée sur le véhicule et deux partie latérales 14, 16 définissant une portion du contour du passage de roue lorsque la pièce 10 est montée sur le véhicule. La pièce 10 comporte deux coins 18, 20 reliant la partie frontale 12 à chaque partie latérale 14, 16. On désigne ici par coin une zone présentant, dans un plan horizontal lorsque la pièce 10 est montée sur le véhicule, un rayon de courbure inférieur à ceux de la partie frontale 12 et, éventuellement, à celui des parties latérales 14, 16. La pièce 10 comporte également deux enfoncements 22, 24 définis par leur contour respectif 26, 28.

La pièce de carrosserie 10 comprend deux bandeaux décoratifs 30, 32. Chaque bandeau 30, 32 revêt en partie les coins 18, 20 de façon à protéger la pièce 10 contre de petits chocs. Chaque bandeau décoratif 30, 32 est positionné dans l'enfoncement 26, 28 correspondant. La surface d'application correspondante n'est pas développable à plat.

En variante, chaque bandeau 30, 32 pourra être positionné en suivant une ligne de style de la pièce 10 ou un contour d'un élément rapporté à la pièce 10.

Chaque bandeau 18, 20 est réalisé dans une ou plusieurs matière(s) plastique(s), en l'espèce en polyuréthane revêtu de film PBT ou de PVC.

On a représenté sur les figures 2 et 3 un ensemble 33 comprenant le bandeau 30 avant son application sur la pièce 10. Le bandeau 30 comporte deux surfaces 34, 36. La surface 34 est destinée à être visible depuis l'extérieur du véhicule une fois le bandeau 30 appliqué contre la pièce 10. La surface 36 est destinée à venir revêtir la pièce 10.

L'ensemble 33 comprend une couche de colle 40 revêtant la surface 36. De préférence , il est nécessaire d'appliquer une pression pour obtenir une adhésion durable de cette colle.

L'ensemble 33 comprend également un film 38 support revêtant la couche de colle 40. Le film 38 est réalisé dans une matière thermoplastique, par exemple en polyester, en polycarbonate ou en PVC.

Comme représentée sur la figure 2, le film 38 comprend des moyens 44 de positionnement du film 38 par rapport à la pièce 10. Dans l'exemple décrit, les moyens de positionnement 44 comprennent un orifice circulaire 46 et un orifice oblong 48 ménagé dans le film 38. L'orifice 48 permet de régler le positionnement du film 38, et donc du bandeau 30, selon une verticale du véhicule lorsque la pièce 10 est montée sur le véhicule.

En outre, le film 38 comprend deux parties 50a, 50b supports séparables l'une par rapport à l'autre. La partie 50a comprend les orifices de positionnement 46, 48. En l'espèce, les deux parties 50a, 50b sont séparables grâce à une ligne de pré-découpe 51.

Afin de fabriquer l'ensemble 33, on utilise une feuille multicouche comprenant successivement:
- une couche de matière plastique dans laquelle est réalisée le bandeau 30,
- une couche de colle 40,
- une couche de matière plastique dans laquelle est réalisée le film support 38.

Dans cette feuille multicouche, on découpe la couche de matière plastique dans laquelle est réalisé le bandeau 30 et la couche de colle 40 de façon à former le bandeau 30 qui est recouvert, du côté destiné revêtir la pièce 10, de la couche de colle 40 et du film support 38 dont la surface reste plus grande que celle du bandeau 30 notamment pour ménager les orifices de positionnement 46, 48,

En l'espèce, on emboutit la feuille multicouche et on ménage simultanément les orifices 46, 48 dans le film 38. Cette opération est réalisée en utilisant des moyens automatisés permettant de délimiter précisément le bandeau 30. Les couches de matière dans lesquelles sont réalisées le bandeau 30 et la colle formant les rébus de l'emboutissage sont alors retirées de façon à obtenir l'ensemble 33 tel que représenté à la figure 3. Une fois la feuille multicouche emboutie, le film 38 comporte, sur une surface qui, préalablement à l'emboutissage, revêtait la couche de colle, une partie 51 a qui revêt la couche de colle 40 et une partie 51 b qui ne revêt pas la couche de colle. Les orifices 46, 48 sont ménagés dans la partie 51 b.

On a représenté sur les figures 4 et 5 un dispositif 52 d'assemblage de chaque bandeau 30, 32 sur la pièce 10.

En référence à la figure 4, le dispositif 52 comprend un bâti 54 sur lequel est fixée la pièce 10. Le dispositif 52 comprend deux moyens basculants 56, 58 de support de l'ensemble 33. Ces moyens 56, 58 sont montés pivotant sur le bâti 54.

Chaque moyen de support 56, 58 comprend des moyens 60 de maintien du film 38. Ces moyens 60 comprennent deux doigts 62, 64 de positionnement du film 38 par rapport à la pièce 10. Chaque doigt 62 est destiné à pénétrer dans l'orifice 46 et chaque doigt 64 est destiné à pénétrer dans l'orifice oblong 48. Sur les figures 4 et 5, seul le doigt 62 est représenté, ce dernier cachant le doigt 64.

Comme représenté sur la figure 5, les moyens 60 sont aptes à plaquer le film 38 par dépression contre une surface 66 de ces moyens 60. Optionnellement, les moyens 60, notamment la surface 66, sont agencés de façon à préformer le bandeau 30.

On va maintenant décrire un procédé d'assemblage de la pièce 10 selon l'invention utilisant le dispositif 52.

Tout d'abord, on chauffe le bandeau 30 à une température proche de 40 à 60°C. En l'espèce, on chauffe l'ensemble 33.

On positionne ensuite le film 38 sur les moyens 60, les doigts 62, 64 traversant respectivement les orifices 46, 48.

Une dépression est créée par les moyens 60 pour maintenir le film 38 en position contre la surface 66.

Les moyens 60 sont basculés grâce aux moyens basculants 56, 58 pour positionner le film 38, et donc le bandeau 30, par rapport à la pièce 10. On positionne ainsi le bandeau 30 par rapport à la pièce 10 en positionnant le film 38 par rapport à cette pièce 10.

On applique alors le bandeau sur la pièce 10. En l'espèce, la partie 50b du film 38 est décollée de la surface 36 du bandeau enduite de la couche de colle 40. Le bandeau 30 découvert est alors collé sur la pièce 10.

On supprime la dépression et on libère la partie 50a du film des moyens 60, notamment en sortant les doigts 60, 62 des orifices 46, 48 par basculement des moyens 56, 58.

On décolle la partie50a du reste de la surface 36 du bandeau 30, puis on colle cette surface 36 sur la pièce 10.

Enfin, on applique une pression contre toute la surface 34 du bandeau, à l'aide d'un rouleau ou d'une raclette par exemple, afin d'assurer une prise durable de la colle 40.

L'invention ne se limite pas au mode de réalisation précédemment décrits. La couche 30 peut notamment être formée d'un film découpé selon le procédé décrit et d'une couche de matière plastique réalisée par coulée à plat. Par ailleurs, on notera que le bandeau peut être multicouche, ou encore présenter des couches supplémentaires par rapport à celles décrites.

Ainsi, le dispositif 52 pourra comprendre des moyens de maintien de chaque partie de bandeau correspondant aux parties 50a, 50b du film 38. Ainsi, dans une variante du procédé, on applique la partie de chaque bandeau 30, 32 correspondant à la partie 50b du film 38 préalablement décollée et on maintien cette partie du bandeau grâce aux moyens de maintien. On désolidarise chaque film 38 des moyens de support 56, 58 et on applique la partie de chaque bandeau 30, 32 correspondant à la partie 50a du film 38 préalablement décollée contre la pièce 10 tout en maintenant l'autre partie du bandeau 30.

## Revendications

1. Pièce de carrosserie (10) d'un véhicule automobile, **caractérisée en ce qu'**elle est revêtue au moins en partie d'un bandeau décoratif (30), la pièce (10) étant obtenue par un procédé dans lequel, le bandeau décoratif (30) étant porté par un film (38) support du bandeau, on chauffe le bandeau (30) décoratif avant de l'appliquer sur la pièce de carrosserie (10) et on positionne le bandeau (30) par rapport à la pièce de carrosserie en positionnant le film (38) par rapport à la pièce de carrosserie (10).

2. Pièce (10) selon la revendication 1, dans laquelle le film support (38) est réalisé dans une matière thermoplastique, par exemple en polyester, en PVC ou en polycarbonate.

3. Pièce (10) selon la revendication 1 ou 2, étant une peau de pare chocs.

4. Pièce (10) selon l'une quelconque des revendications précédentes, dans laquelle le film (38) comprend des moyens (44) de positionnement du film (38) par rapport à la pièce de carrosserie (10), ces moyens (44) comprenant au moins un orifice circulaire (46) et au moins un orifice oblong (48) ménagé dans le film support (38).

5. Pièce (10) selon l'une quelconque des revendications précédentes, dans laquelle le bandeau décoratif (30) est revêtu d'une couche de colle (40) sur une surface (36) destinée à revêtir la pièce de carrosserie, de préférence, une colle dont la tenue sera garantie par pression à l'application.

6. Pièce (10) selon les revendications 4 et 5 prises ensemble, dans laquelle, avant de chauffer le bandeau décoratif (30), on découpe, dans une feuille multicouche comprenant :
- une couche de matière plastique dans laquelle est réalisée le bandeau décoratif (30),
- la couche de colle (40) revêtant le bandeau décoratif (30),
- une couche de matière plastique dans laquelle est réalisée le film support (38) revêtant la couche de colle (40),
la couche de matière plastique dans laquelle est réalisée le bandeau décoratif (30) et la couche de colle (40) de façon à former le bandeau (30), les orifices (46, 48) étant ménagés dans une partie (51 b) du film (38) ne revêtant plus la couche de colle (40) après la découpe de la feuille multicouche.

7. Pièce (10) selon la revendication précédente, dans laquelle on ménage les orifices (46, 48) dans le film support (38) et on découpe la couche de matière plastique dans laquelle est réalisé le bandeau décoratif (30) et la couche de colle (40) par emboutissage de la feuille multicouche.

8. Pièce (10) selon l'une quelconque des revendication précédentes, dans laquelle le bandeau décoratif (30) est positionné dans un enfoncement (22, 24) de la pièce de carrosserie (10) sur une surface en trois dimensions non développable.

9. Pièce (10) selon l'une quelconque des revendication précédentes, dans laquelle le bandeau décoratif (30) est positionné en suivant une ligne de style ou un contour d'un élément rapporté à la pièce.

10. Pièce (10) selon la revendication 6 ou 8, dans laquelle le film support (38) comprend deux parties (50a, 50b) support du bandeau décoratif (30) séparables l'une par rapport à l'autre, une des deux parties comprenant les orifices de positionnement (46, 48).

11. Véhicule automobile **caractérisé en ce qu'**il comprend une pièce de carrosserie (10) selon l'une quelconque des revendications précédentes.

## Claims

1. A motor vehicle bodywork part (10), **characterized in that** it is covered at least in part by a decorative strip (30), the part (10) being obtained by a method in which, with the decorative strip (30) being carried by a strip support film (38), the decorative strip (30) is heated prior to being applied against the bodywork part (10) and the strip (30) is positioned relative to the bodywork part by positioning the film (38) relative to the bodywork part (10).

2. A part (10) according to claim 1, wherein the support film (38) is made of a thermoplastic material, e.g. of polyester, of PVC, or of polycarbonate.

3. A part (10) according to claim 1 or claim 2, the part being a bumper skin.

4. A part (10) according to any preceding claim, wherein the film (38) includes means (44) for positioning the film (38) relative to the bodywork part (10), said means (44) comprising at least one circular orifice (46) and at least one oblong orifice (48) formed in the support film (38) .

5. A part (10) according to any preceding claim, wherein the decorative strip (30) is coated in a layer of adhesive (40) on a surface (36) that is to cover the bodywork part, preferably an adhesive for which adhesion is guaranteed by applying pressure on application.

6. A part (10) according to claims 4 and 5 taken together, wherein, prior to heating the decorative strip (30), a multilayer sheet is provided comprising:
• a layer of plastics material from which the decorative strip (30) is made;
• the layer of adhesive (40) covering the decorative strip (30); and
• a layer of plastics material from which the support film (38) is made covering the layer of adhesive (40);
and wherein both the layer of plastics material from which the decorative strip (30) is made and the layer of adhesive (40) are cut out from the multilayer sheet so as to form the strip (30), the orifices (46, 48) being arranged in a portion (51b) of the film (38) that no longer covers the layer of adhesive (40) after the layers have been cut out from the multilayer sheet.

7. A part (10) according to the preceding claim, wherein the orifices (46, 48) are formed in the support film (38) and the layer of plastics material from which the decorative strip (30) is made and the layer of adhesive (40) are cut out by stamping the multilayer sheet.

8. A part (10) according to any preceding claim, wherein the decorative strip (30) is positioned in a setback (22, 24) of the bodywork part (10) on a three-dimensional surface that is not developable.

9. A part (10) according to any preceding claim, wherein the decorative strip (30) is positioned along a style line or an outline of an element fitted to the part.

10. A part (10) according to claim 6 or claim 8, wherein the support film (38) comprises two portions (50a, 50b) for supporting the decorative strip (30) that are separable from each other, one of the two portions including the positioning orifices (46, 48).

11. A motor vehicle, **characterized in that** it includes a bodywork part (10) according to any preceding claim.

## Patentansprüche

1. Karosseriebauteil (10) eines Kraftfahrzeugs, **dadurch gekennzeichnet, dass** es zumindest teilweise mit einer Zierleiste (30) beschichtet ist, wobei das Bauteil (10) erhalten wird durch ein Verfahren, bei dem die Zierleiste (30), welche Zierleiste (30) von einem Trägerfilm (38) der Leiste getragen wird, erhitzt wird, bevor sie auf das Karosseriebauteil (10) aufgebracht wird, und die Leiste (30) in Bezug auf das Karosseriebauteil positioniert wird, indem der Film (38) in Bezug auf das Karosseriebauteil (10) positioniert wird.

2. Bauteil (10) nach Anspruch 1, wobei der Trägerfilm (38) aus einem thermoplastischen Material hergestellt ist, und zwar aus Polyester, PVC oder Polycarbonat.

3. Bauteil (10) nach Anspruch 1 oder 2, das eine Stoßfängerhaut ist.

4. Bauteil (10) nach einem der vorstehenden Ansprüche, wobei der Film (38) Mittel (44) zur Positionierung des Films (38) in Bezug auf das Karosseriebauteil (10) umfasst, wobei diese Mittel (44) zumindest eine kreisförmige Öffnung (46) und zumindest eine längliche Öffnung (48), angeordnet im Trägerfilm (38), umfassen.

5. Bauteil (10) nach einem der vorstehenden Ansprüche, wobei die Zierleiste (30) beschichtet ist mit einer Klebstoffschicht (40) auf einer Fläche (36) zum Beschichten des Karosseriebauteils, vorzugsweise einem Klebstoff, dessen Haftfähigkeit durch Druck bei der Anwendung garantiert sein wird.

6. Bauteil (10) nach den Ansprüchen 4 und 5 zusammengenommen, wobei, vor Erhitzen der Zierleiste (30), aus einer Mehrschichtfolie mit:
- einer Kunststoffschicht, aus der die Zierleiste (30) hergestellt wird,
- der Klebstoffschicht (40), die die Zierleiste (30) beschichtet,
- einer Kunststoffschicht, aus der der Trägerfilm (38) hergestellt wird, der die Klebstoffschicht (40) beschichtet,
die Kunststoffschicht, aus der die Zierleiste (30) hergestellt wird, und die Klebstoffschicht (40) so zugeschnitten werden, dass die Leiste (30) ausgebildet wird, wobei die Öffnungen (46, 48) in einem Teil (51 b) des Films (38) angeordnet sind, der die Klebstoffschicht (40) nach dem Zuschnitt der Mehrschichtfolie nicht mehr beschichtet.

7. Bauteil (10) nach dem vorstehenden Anspruch, wobei die Öffnungen (46, 48) im Trägerfilm (38) angeordnet sind und die Kunststoffschicht, aus der die Zierleiste (30) hergestellt wird, und die Klebstoffschicht (40) durch Stanzen der Mehrschichtfolie zugeschnitten werden.

8. Bauteil (10) nach einem der vorstehenden Ansprüche, wobei die Zierleiste (30) in einer Einsenkung (22, 24) des Karosseriebauteils (10) auf einer nicht abwickelbaren dreidimensionalen Fläche positioniert ist.

9. Bauteil (10) nach einem der vorstehenden Ansprüche, wobei die Zierleiste (30) einer Stillinie oder einem Umriss eines am Bauteil angefügten Elements folgend positioniert ist.

10. Bauteil (10) nach Anspruch 6 oder 8, wobei der Trägerfilm (38) zwei Trägerteile (50a, 50b) der Zierleiste (30) umfasst, die voneinander trennbar sind, wobei eines der beiden Teile die Positionierungsöffnungen (46, 48) umfasst.

11. Kraftfahrzeug, **dadurch gekennzeichnet, dass** es ein Karosseriebauteil (10) nach einem der vorstehenden Ansprüche umfasst.
